# EUROPÄISCHE PATENTSCHRIFT

(11) **EP 1 096 181 B1**
(45) Veröffentlichungstag und Bekanntmachung des Hinweises auf die Patenterteilung: **22.09.2004**
(21) Anmeldenummer: 00115944.1
(22) Anmeldetag: 25.07.2000
(51) Int. Cl.: F16J 15/08

(54) **Mehrlagige Zylinderkopfdichtung mit Aussenlage**
Multi-layered cylinder head gasket with external layer
Joint de culasse à couches multiples comportant une couche externe

(30) Priorität: 26.10.1999 DE 19951530
(43) Veröffentlichungstag der Anmeldung: 02.05.2001
(73) Patentinhaber: Federal -Mogul Sealing Systems GmbH, 57562 Herdorf (DE)
(72) Erfinder: Heilig, Markus, 57518 Betzdorf (DE); Retiere, Alain, 40629 Erkrath (DE); Klinner, Manfred, 53844 Troisdorf (DE)
(74) Vertreter: Becker Kurig Straus

(56) Entgegenhaltungen:
- US-A- 4 325 559
- PATENT ABSTRACTS OF JAPAN vol. 010, no. 365 (M-542), 6. Dezember 1986 (1986-12-06) -& JP 61 160549 A (NIPPON RAINTSU KK), 21. Juli 1986 (1986-07-21)

## Beschreibung

Die vorliegende Erfindung betrifft eine mehrlagige Zylinderkopfdichtung gemäß dem Oberbegriff des Anspruchs 1. Eine derartige Zylinderkopfdichtung ist beispielsweise aus der US-A-4 325 559 bekannt.

Zylinderkopfdichtungen dienen zur Gas- wie auch zur Wasser- bzw. Ölabdichtung bei Übergängen von Leitungen und Zylinderbohrung von einem ersten zu einem zweiten Material. Insbesondere bei Dieselmotoren unterliegt die Brennraumgasabdichtung hohen Anforderungen. Um eine statisch ausreichende Dichtheit gewährleisten zu können, sind bestimmte Flächenpressungen notwendig, die eine Kraftverteilung dergestalt erfordern, daß der größte Teil der zur Verfügung stehenden Schraubenkräfte gezielt in den Bereich der Brennraumabdichtung eingeleitet wird. Im Betrieb des Verbrennungsmotors kommt zu der statischen Belastung eine zusätzliche, überlagernde dynamische Belastung hinzu, wobei bei jedem Arbeitstakt des Verbrennungsmotors die im Brennraum erzeugte Verbrennungskraft eine Entlastung der Brennraumabdichtung bewirkt.

Bei Verbrennungsmotoren sind verschiedenartig aufgebaute Zylinderkopfdichtungen bekannt. Beispielsweise geht aus der JP 62 -206258 eine Zylinderkopfdichtung hervor, die eine Dichtungshülle als Brennraumeinfassung in der Form einer Umkröpfung hat. In dieser Umkröpfung ist eine Vollsicke angeordnet, deren Auswölbung entweder zu den Ventilen hinoder von diesen wegweist. Aus der U.S. 5,280,929 ist eine Zylinderkopfdichtung bekannt, die eine Abdichtung für mehrere Zylinder zur Verfügung stellt. Eine Abdichtung der Zylinderkopfdichtung sieht eine Umbördelung vor, in der zwei oder mehr Schichten angeordnet sind, wobei innnerhalb der Umbördelung eine Sicke angeordnet ist. Die Zylinderkopfdichtung hat eine derartige Dimensionierung bezüglich der internen Durchgänge, daß die Umbördelung sich in den jeweiligen Durchgang zwischen dem Zylinderkopf und dem Zylinderblock hinein erstreckt. Aus der U.S. 4,898,396 ist eine Zylinderkopfdichtung bekannt, die eine Umbördelung mit einer in der Umbördelung angeordneten Vollsicke hat. Die Umbördelung dient als Brennraumabdichtung und definiert die Zylinderbohrung. Aus der U.S. 5,161,809 ist eine Zylinderkopfdichtung bekannt, bei der Materialdicken einer Endplatte und einer daran angeschlossenen Platte so aufeinander abgestimmt sein sollen, daß eine zur Abdichtung geeignete Oberflächenspannung erzeugt wird.

Aufgabe der vorliegenden Erfindung ist es, eine Zylinderkopfdichtung zu schaffen, die zum einen eine bei statischen wie auch dynamisch wirkenden Kräften gute Dichtwirkung gewährleistet und zum anderen auf den Aufbau insbesondere von Dieselmotoren mit eingesetzten Zylinderlaufbuchsen abstimmbar ist.

Diese Aufgabe wird mit einer mehrlagigen Zylinderkopfdichtung mit den Merkmalen des Anspruches 1 gelöst. Vorteilhafte Weiterbildungen und Ausgestaltungen sind in den abhängigen Ansprüchen angegeben.

Eine erfindungsgemäße mehrlagige Zylinderkopfdichtung weist Öffnungen entsprechend einer Anzahl von Brennkammern einer Brennkraftmaschine auf sowie eine zu einer Öffnung hin angeordnete Brennraumeinfassung, wobei die Brennraumeinfassung zumindest eine Funktionslage der Zylinderkopfdichtung umfaßt, wobei innnerhalb der Brennraumeinfassung eine Vollsicke der Funktionslage angeordnet ist. Die Zylinderkopfdichtung weist eine Außenlage auf, die von der Brennraumeinfassung getrennt angeordnet ist, wobei die Außenlage mit der Zylinderkopfdichtung losgelöst von der Brennraumeinfassung mit zumindest einer anderen Lage der Zylinderkopfdichtung verbunden ist. Diese Entkoppelung der Außenlage von der Brennraumeinfassung ermöglicht eine besonders hohe Flexibilität der Zylinderkopfdichtung unter gleichzeitiger Bereitstellung einer hohen Preßkraft.

Als Außenlage kann sowohl eine gesickte Funktionslage als auch eine Distanzlage verwendet werden. Die Distanzlage ist ohne zusätzliche Sicken ausgeführt und daher flach. Insbesondere ist eine erste Kante der Außenlage direkt einer zweiten Kante der Brennraumeinfassung gegenüberliegend, wobei beide Kanten ein Spalt trennt, der vorzugsweise mindestens 0,3 Millimeter beträgt.

Als Brennraumeinfassung wird zweckmäßigerweise eine Umbördelung verwendet, wobei im folgenden zusätzliche Ausgestaltungen der Zylinderkopfdichtung eine derartige Umbördelung exemplarisch aufweisen.

Bevorzugt ist es, wenn die Umbördelung eine Höhe aufweist, die zwischen 0 mm und 0,3 mm größer ausfällt gegenüber einer übrigen Höhe der Zylinderkopfdichtung, wobei vorzugsweise diese Höhendifferenz zwischen 0,1 und 0,2 mm liegt, insbesondere bei etwa 0,15 mm. Auf diese Weise stellt die Zylinderkopfdichtung aus sich heraus eine Eigenflexibilität zur Verfügung, die andererseits auch aufgrund einer geeigneten Höhendimensionierung gute Dichteigenschaften hat. Zur Erzielung einer besonders gut an die bei einem Dieselmotor wirkenden Kräfte angepaßten Zylinderkopfdichtung ist diese so aufgebaut, daß die Umbördelung aus einem ziehfähigen Edelstahlblech hergestellt ist, wobei die Vollsicke in einem Federstahlblech angeordnet ist und die Zylinderkopfdichtung eine Distanzschicht in Form eines Stahlbleches zur Dickenanpassung der Zylinderkopfdichtung hat, die sich in die Umbördelung hinein erstreckt.

Als vorteilhaft hat es sich darüber hinaus erwiesen, wenn die Materialien der Zylinderkopfdichtung gewisse Dicken aufweisen, die in einem bestimmten Verhältnis zueinander stehen. Dadurch wird erzielt, daß diejenigen Materialien, die besonders elastisch wirken, auch die ihnen zugewiesene Funktion bei statisch wie auch bei dynamisch wirkenden Kräften wahrnehmen. Eine Ausgestaltung einer derartigen Zylinderkopfdichtung hat den Aufbau dergestalt, daß eine erste Materialstärke DM der Umbördelung ein Verhältnis zu einer zweiten Materialstärke DS der Außenlage von DM : DS von in etwa 1 : 1,2 bis 1:1,5 hat. Beispielsweise hat die erste Materialstärke DM ein Größe von etwa 0,2 mm, die zweite Materialstärke DS eine Größe von etwa 0,25 mm . Auf diese Weise läßt sich ein Dickenunterschied zwischen dem Bereich einer Gasabdichtung der Zylinderkopfdichtung zu einer Restfläche der Zylinderkopfdichtung von etwa 0,15 mm erzielen. Dieses dient zum einen zum Stabilisieren der Zylinderkopfdichtung, zum anderen erlaubt dieses aber auch eine besonders gute Spannungsverteilung auf einen Gasabdichtungsbereich der Zylinderkopfdichtung hin.

Durch die Entkoppelung der Außenlage von der Umbördelung ermöglicht diese Art der Konstruktion der Zylinderkopfdichtung, daß die Umbördelung in Bezug auf die Außenlage eine große flexibilität zur Verfügung stellt. Dieser Freiheitsgrad beträgt mindestens 0,3 mm. Dadurch können Relativbewegeungen, die entlang der Zylinderkopfdichtung ausgeübt werden, über das elastische Eigenverhalten der Zylinderkopfdichtung ausgeglichen werden.

Eine besondere Steifigkeit der Brennraumabdichtung läßt sich erzielen, indem die Umbördelung zumindest teilweise gehärtet ist, insbesonders mittels einer Induktionshärtung. Dadurch läßt sich beispielsweise ein Bereich der Umbördelung steifer ausbilden als ein anderer Bereich, so daß die Umbördelung selbst die Steifigkeit der gasabdichtend wirkenden Bereiche der Zylinderkopfdichtung entscheidend mitbestimmt. Vorzugsweise weist darüber hinaus zumindest eine Außenfläche der Umbördelung eine reibungsvermindernde und/oder abdichtende Beschichtung auf. Dadurch wird gewährleistet, daß eine lange Lebensdauer mit einer Zylinderkopfdichtung erzielbar ist, da der Verschleiß an der Dichtung selbst insbesondere durch die Beschichtung aufgefangen wird.

Einen Einfluß auf das Zusammenspiel zum Beispiel zwischen dem Zylinderkopf und dem Zylinderblock eines Dieselmotors sowie der Zylinderkopfdichtung hat die Geometrie der Zylinderkopfdichtung, wobei die Umbördelung selbst speziell ausgestaltet werden kann. Vorzugsweise weist eine Geometrie der Umbördelung einen in etwa senkrecht aufweisenden Steg auf, dessen Erstreckung in etwa parallel zu einer Erstreckung der Zylinderlaufbuchse verläuft. Die Umbördelung ist auf diese Weise ab einem bestimmten Bereich besonders steif ausgebildet. Dadurch läßt sich eine Deformation dieses Bereiches verhindern, so daß die auftretenden Kräfte über die anderen Bereiche der Umbördelung wie auch der in der Umbördelung angeordneten Schichten aufgenommen werden. Eine weitere Ausgestaltung der Umbördelung sieht vor, daß eine Geometrie der Umbördelung V-förmig ist. Die Schenkel des V sind entweder teilweise oder als Ganzes flexibel. Sie wirken aufgrund ihrer Verbindung miteinander als Feder und dichten somit auch bei dynamisch wirkenden Kräften sicher ab. Eine weitere Ausgestaltung der Geometrie der Umbördelung ist so gewölbt, daß eine Verlängerung eines ersten und eines zweiten Endes der Umbördelung entlang einer Erstreckung der Umbördelung zu einer Überschneidung führen würde. Dadurch gelingt zum einen, daß eine Eigenflexibilität der Umbördelung zur Verfügung gestellt wird. Zum anderen dient diese Geometrie auch als Sicherung der Bauteile der Zylinderkopfdichtung. Im Falle eines Bruches bleibt die Umbördelung durch die Gestalt der Sicke an dem übrigen Teil der Zylinderkopfdichtung befestigt und kann nicht in den Brennraum geraten.

Weiterhin erlaubt die oben geschilderte konstruktive Gestaltung der Zylinderkopfdichtung eine hohe Anpassungsmöglichkeit an verschieden ausgestaltete Verbrennungskraftmaschinen. Beispielsweise bei einem Dieselmotor erlaubt eine derartige Zylinderkopfdichtung eine getrennte Anordnung jeweils einer einstückigen Brennraumeinfassung zu einer Öffnung in der Zylinderkopfdichtung für einen Brennraum. Trotz eingeschränkter Platzverhältnisse ist dadurch eine Gasabdichtung des Brennraumes auf dem Rand jeder Zylinderlaufbuchse gesichert. Darüber hinaus gewährleistet die Anordnung einer einstückigen Brennraumeinfassung um einen Zylinder, daß die statisch eingestellten Anziehkräfte an diesem Zylinder auch nur weitestgehend diese einzelne Brennraumeinfassung beeinflußt. Die an den anderen Zylindern wirkenden Anziehkräfte können damit auf die dortige jeweilige Brennraumeinfassung angepaßt werden. Eine zwischen den Brennraumeinfassungen auftretende Beeinflussung untereinander tritt demgegenüber zurück. Eine weitere Ausgestaltung sieht vor, daß zumindest zwei Öffnungen der Zylinderkopfdichtungen jeweils eine Brennraumeinfassung zugeordnet haben, die miteinander einstückig verbunden sind, quasi in der Form einer "Brille".

Vorzugsweise ist die Brennraumeinfassung in der Form der Umbördelung insbesondere so dimensioniert, daß ihre Längsabmessung kleiner/gleich einer Wandstärke der Zylinderlaufbuchse ist. Auf diese Weise gelingt es, daß einerseits die statischen Kräfte durch das Zusammenspiel der einzelnen Bauteile der Zylinderkopfdichtung aufgefangen werden, andererseits die Umbördelung, ihre Anordnung in Bezug auf die Zylinderbohrung und die dabei zur Verfügung gestellte Flexibilität durch die Vollsicke wie aber auch durch eine Erstreckung von deren Materialschicht von der Zylinderbuchse in den Bereich zwischen Zylinderkopf und Motorblock eine besonders gute Aufnahmemöglichkeit von dynamischen Kräften während des Betriebes beispielsweise eines Dieselmotors bewirkt.

Wird ein Dieselmotor mit nassen Laufbuchsen und insbesondere variierenden Zylinderlaufbuchsenüberständen eingesetzt, hat es sich als vorteilhaft erwiesen, wenn eine Zylinderkopfdichtung verwendet wird, wie sie oben beschrieben ist. Durch die hohe Eigenflexibilität dieser Zylinderkopfdichtung bleibt eine Gasdichtigkeit auch bei hohen dynamischen Schwingungen trotz der Zylinderlaufbuchsenüberstände gewährleistet.

Weitere vorteilhafte Ausgestaltungen und Weiterbildungen sind in der nachfolgenden Zeichnung angegeben, wobei Merkmale daraus auch untereinander zu neuen Ausgestaltungen weitergebildet werden können. Es zeigen:
Figur 1 eine erste Ausgestaltung einer Zylinderkopfdichtung, gemäß der Erfindung
Figur 2 eine nicht erfindungsgemäß Ausgestaltung einer Zylinderkopfdichtung,
Figur 3 bis 6 verschiedene Geometrien einer Umbördelung,
Figur 7 eine Anordnung von einzelnen, einstückigen Brennraumeinfassungen einer Zylinderkopfdichtung,
Figur 8 eine Schnittansicht entlang des Schnittes VII-VII aus Figur 7,
Figur 9 eine Anordnung von miteinander verbundenen Brennraumeinfassungen einer Zylinderkopfdichtung und
Figur 10 eine Schnittansicht entlang des Schnittes IX-IX aus Figur 9.

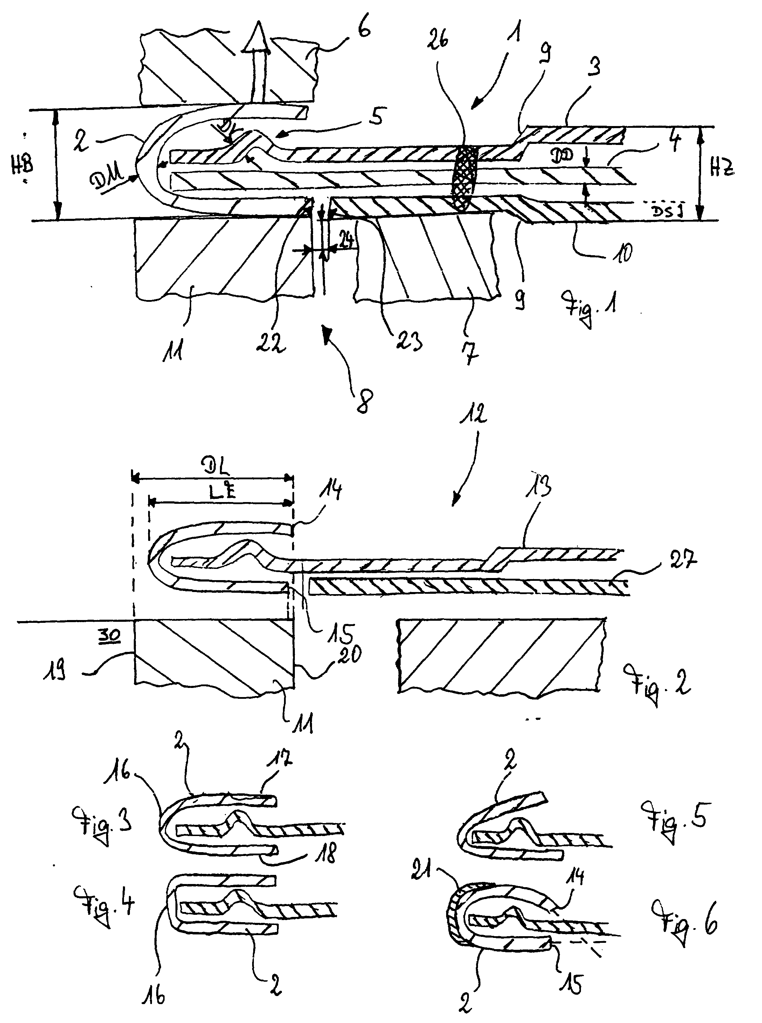

Figur 1 zeigt eine erste Zylinderkopfdichtung 1 im Querschnitt. Die erste Zylinderkopfdichtung 1 hat zur Abdichtung eines nicht näher dargestellten Verbrennungsraumes als Brennraumeinfassung eine Umbördelung 2. Die Umbördelung 2 ist aus einem Stück. Sie faßt eine erste Funktionslage 3 und eine erste Distanzlage 4 ein. Die erste Funktionslage 3 hat eine Vollsicke 5. Die Vollsicke 5 ist zwischen der Umbördelung 2 angeordnet. Die Vollsicke 5 stellt im Zusammenspiel mit der Umbördelung 2 sowie durch die Abkoppelung einer Außenlage 10 von der Umbördelung 2 sicher, daß eine Abdichtung zwischen einem Zylinderkopf 6 und einem Zylinderblock 7 eines nicht näher dargestellten Dieselmotors 8 auch bei den dort auftretenden hohen Kräften, statisch wie insbesondere dynamisch, gewährleistet bleibt. Zum einen ist die Außenlage 10 von der Umbördelung 2 getrennt, das bedeutet, nicht von dieser umfaßt und damit auch nicht direkt mit dieser verbunden. Das bewirkt ein flexibles Ausgleichen von insbesondere dynamischen Kräften zwischen Umbördelung 2 und der Außenlage 10, da diese gegeneinander beweglich sind. Dafür sind eine erste Kante 22 der Außenlage 10 und eine zweite Kante 23 der Umbördelung 2 berührungslos direkt gegenüberliegend, wodurch ein Spalt 24 zwischen den Kanten 22, 23 sich bildet. Dieser Spalt 24 ist vorzugsweise mindestens 0,3 Millimeter breit, so daß bei einer Ausgleichsbewegung zwischen der Außenlage 10 und der Umbördelung 2 diese vorzugsweise nicht aneinanderstoßen können. Zum anderen weist die Umbördelung 2 eine Eigenflexibilität, angedeutet durch den eingezeichneten Pfeil, zum Ausgleich von auftretenden vorzugsweise dynamischen Kräften auf. Die Flexibilität von Vollsicke 5 und Umbördelung 2 sind zweckmäßigerweise so aufeinander abgestimmt, daß die Vollsicke 5 im Dauerfestigkeitsbereich liegend nahe einer Totaldeformation geringe Schwingungsamplituden von wenigen Mikrometern aufnehmen kann. Darüber hinaus weist die erste Funktionslage 3 eine Stufe 9 auf, die einerseits eine weitere Abdichtung beispielsweise für eine Wasserbohrung oder Ölbohrung zur Verfügung stellt. Gleichzeitig weist die erste Funktionslage 3 mit dieser Stufenbildung auch eine zusätzliche Flexibilität auf. Neben der ersten Funktionslage 3 der Zylinderkopfdichtung 1 hat die Außenlage 10 etwa an der gleichen Position wie die erste Zwischenlage 3 eine Stufe 9 zur Abdichtung. Die erste Distanzlage 4 dient vorzugsweise zur Anpassung der Dichtungsdicke an den Motor. Dabei erstreckt sich die erste Distanzlage 4 in die Umbördelung 2 hinein, so daß die der ersten Distanzlage 4 zukommende Eigenflexibilität gegebenenfalls ebenfalls zur Kompensation von Schwingungen nutzbar ist. Für eine Verbesserung der Dichtungseigenschaften hat es sich als günstig erwiesen, daß eine Höhe HB der Umbördelung 2 größer ist als eine übrige Höhe HZ der Zylinderkopfdichtung 1. Dadurch gelingt eine Konzentrierung der für die Abdichtung notwendigen Kräften auf den Bereich der Umbördelung 2. Eine geeignete Dimensionierung läßt sich mittels gezielter Auswahl der Materialstärken der verwendeten Bauteile der Zylinderkopfdichtung 1 erreichen. Eine erste Dicke DM des Materials der Umbördelung steht dann in einem bestimmten Verhältnis zu einer zweiten Dicke DS der Außenlage 10. Damit die Außenlage 10 in der Zylinderkopfdichtung 1 befestigt ist, weist diese eine Verbindung zu der ersten Distanzlage 4 und der ersten Funktionslage 3 mittels einer Schweißung 26 auf. Die Verbindung der Lagen 3, 4, 10 kann auch mittels anderer geeigneter Mittel und Verfahren erfolgen, beispielsweise mittels eines Nietes, wobei die Entfernung der Anordnung der Verbindung zum Spalt 24- wiederum das Federverhalten der Zylinderkopfdichtung 1 beeinflußt.

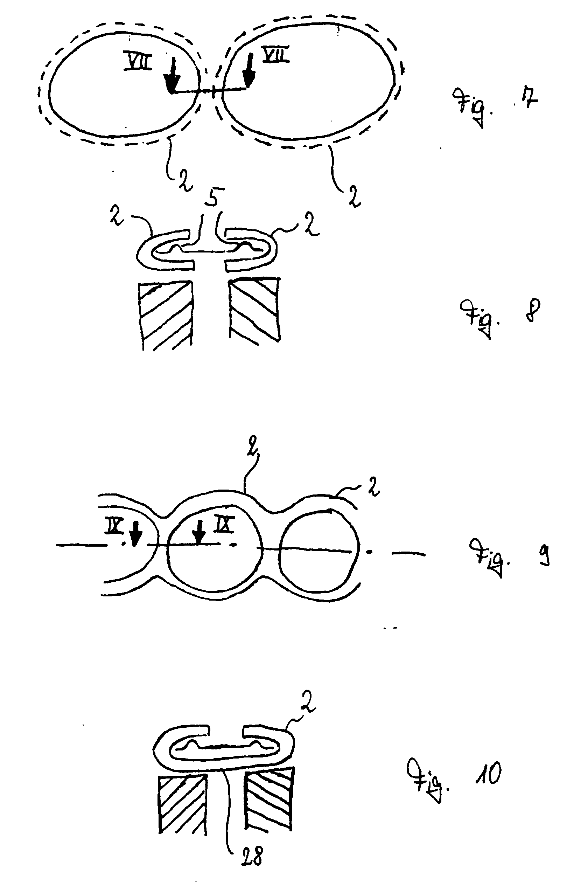

Figur 2 zeigt eine zweite Zylinderkopfdichtung 12. Diese hat nur eine Lage, die sich in die Umbördelung 2 erstreckt: eine zweite Funktionslage 13. Die Umbördelung hat eine Längsabmessung LE, die in etwa mit einer Wandstärke DL der Zylinderlaufbuchse 11 übereinstimmt. Wie in Figur 2 dargestellt, ist die Längsabmessung LE sogar etwas kürzer. Die Wandstärke DL der Zylinderlaufbuchse 11 wird durch den inneren und den äußeren Rand der Zylinderlaufbuchse 11 definiert, wobei der innere Rand 19 einem Inneren einer Zylinderbohrung 30 zugekehrt ist. Die Umbördelung 2 liegt somit jedoch vollständig auf der Zylinderlaufbuchse 11 auf, ohne sich über den inneren oder den äußeren Rand der Zylinderlaufbuchse 11 hinaus zu erstrecken. Weiterhin hat die Umbördelung ein erstes Ende 14 und ein zweites Ende 15. Das erste Ende 14 schließt genau mit der Zylinderlaufbuchse 11 ab. Das zweite Ende 15 dagegen ist verkürzt, so daß ein gewisser Abstand verbleibt. Die Außenlage 10 ist in diesem Beispiel der zweiten Zylinderkopfdichtung 12 eine zweite, flache Distanzlage 27.

Figur 3 zeigt eine Umbördelung 2, die in etwa U-förmig gestaltet ist. Ein Verbindungssteg 16 eines ersten Schenkels 17 und eines zweiten Schenkels 18 ist gerundet ausgeführt, insbesonders als Halbrund.

Figur 4 zeigt eine Umbördelung 2, die ebenfalls U-förmig ist. Der Verbindungssteg 16 ist jedoch gerade ausgeführt. Auf diese Weise läßt sich eine besonders steife Geometrie einer Umbördelung in diesem Bereich gewinnen.

Figur 5 zeigt eine V-förmige Umbördelung, die besonders flexibel ist.

Figur 6 zeigt eine Umbördelung 2, wobei deren erstes Ende 14 und deren zweites Ende 15 in ihrer jeweiligen Verlängerung, die gestrichelt angedeutet ist, sich überschneiden würden. Weiterhin weist die Umbördelung eine Beschichtung 21 auf, die reibungsvermindernde und/oder abdichtungsfördernde Eigenschaften hat.

Figur 7 zeigt eine Anordnung von einzelnen, einstückigen Brennraumeinfassungen 2 einer nicht näher dargestellten Zylinderkopfdichtung. Die Brennraumeinfassungen 2 sind getrennt voneinander und berühren sich daher auch nicht. Dieses wird anhand der nächsten Figur 8 deutlich.

Figur 8 zeigt eine Schnittansicht entlang des Schnittes VII-VII aus Figur 7. Beide einstückigen Brennraumeinfassungen 2 in der Form von Umbördelungen weisen jeweils in ihrem Inneren eine Vollsicke 5 auf.

Figur 9 zeigt eine Anordnung von miteinander verbundenen Brennraumeinfassungen 2 einer nicht näher dargestellten Zylinderkopfdichtung. Diese sind so miteinander verbunden, daß sie eine geometrische Figur einer "Brille" ergeben, wobei diese "Brille" nicht auf zwei Öffnungen beschränkt ist, wie es auch in der Figur 8 angedeutet ist. Der genaue Aufbau dieser "Brille" wird in Figur 10 deutlich.

Figur 10 zeigt eine Schnittansicht entlang des Schnittes IX-IX aus Figur 9. Die beiden Brennraumeinfassungen 2 sind miteinander verbunden, so daß, wie dargestellt, dem Zylinderkuerbelgehäuse eine geschlossene Brennraumeinfassungsseite 28 zugewandt ist. Die geschlossene Brennraumeinfassungseite 28 kann jedoch auch dem Zylinderkopf, der nicht dargestellt ist, zugewandt sein.

## Patentansprüche

1. Mehrlagige Zylinderkopfdichtung (1; 12) mit Öffnungen entsprechend einer Anzahl von Brennkammern einer Brennkraftmaschine mit eingesetzten Zylinderlaufbuchsen und mit einer zu einer Öffnung hin angeordneten Brennraumeinfassung (2), wobei die Brennraumeinfassung (2) zumindest eine Funktionslage (3) der Zylinderkopfdichtung (1; 12) einfaßt, wobei innerhalb der Brennraumeinfassung (2) eine Vollsicke (5) der Funktionslage (3) angeordnet ist, wobei die Zylinderkopfdichtung (1, 12) eine Außenlage (10, 27) aufweist, die außerhalb der Brennraumeinfassung (2) von dieser getrennt angeordnet ist und sich im montierten Zustand außerhalb der Zylinderlaufbuchse (11) erstreckt, **dadurch gekennzeichnet, daß** die Brennraumeinfassung (2) aus einem ziehfähigen Edelstahlblech hergestellt ist, wobei die Vollsicke (5) in einem Federstahlhlech gebildet ist und die Zylinderkopfdichtung (1; 12) eine erste Distanzlage (4) in Form eines Stahlbleches zur Dickenanpassung der Zylinderkopfdichtung (1; 12) hat, die sich in die Brennraumeinfassung (2) hinein erstreckt.

2. Zylinderkopfdichtung (1; 12) nach Anspruch 1, **dadurch gekennzeichnet, daß** die Außenlage (10, 27) mit zumindest einer anderen Lage (3, 4) der Zylinderkopfdichtung (1) verbunden ist.

3. Zylinderkopfdichtung (1; 12) nach Anspruch 1 oder 2, **dadurch gekennzeichnet, daß** die Außenlage (10) eine erste Kante ( 23) hat, die einer zweiten Kante (22) der Brennraumeinfassung (2) berührungslos direkt gegenüberliegt, so daß ein dadurch gebildeter Spalt mindestens 0,3 Millimeter weit ist.

4. Zylinderkopfdichtung (1; 12) nach einem der Ansprüche 1 bis 3, **dadurch gekennzeichnet, daß** die Brennraumeinfassung (2) eine Höhe (HB) aufweist, die zwischen 0 mm und 0,3 mm größer ausfällt gegenüber einer übrigen Höhe (HZ) der Zylinderkopfdichtung (1; 12).

5. Zylinderkopfdichtung (1; 12) nach einem der vorhergehenden Ansprüche, **dadurch gekennzeichnet, daß** eine erste Materialstärke (DM) der Brennraumeinfassung (2) ein Verhältnis zu einer zweiten Materialstärke (DS) der Außenlage (10,27) von DM : DS von etwa 1:1,2; bis 1:1,5 hat.

6. Zylinderkopfdichtung (1; 12) nach einem der vorhergehenden Ansprüche, **dadurch gekennzeichnet, daß** die Brennraumeinfassung (2) gehärtet ist, insbesonders mittels einer Induktionshärtung.

7. Zylinderkopfdichtung (1; 12) nach einem der vorhergehenden Ansprüche, **dadurch gekennzeichnet, daß** zumindest eine Außenfläche der Brennraumeinfassung (2) eine reibungsvermindernde und/oder abdichtende Beschichtung (21) aufweist.

8. Zylinderkopfdichtung (1; 12) nach einem der vorhergehenden Ansprüche, **dadurch gekennzeichnet, daß** eine Geometrie der Brennraumeinfassung (2) einen in etwa senkrechten Steg (16) aufweist, der sich etwa parallel zu der Zylinderlaufbuchse (11) erstreckt.

9. Zylinderkopfdichtung (1; 12) nach einem der vorhergehenden Ansprüche 1 bis 8, **dadurch gekennzeichnet, daß** eine Geometrie der Brennraumeinfassung (2) V-förmig ist.

10. Zylinderkopfdichtung (1; 12) nach einem der vorhergehenden Ansprüche 1 bis 9, **dadurch gekennzeichnet, daß** eine Geometrie der Brennraumeinfassung (2) so gewölbt ist, daß eine Verlängerung der Brennraumeinfassung (2) über ein erstes (14) und ein zweites (15) Ende der Brennraumeinfassung (2) hinaus zu einer Überschneidung führt.

11. Zylinderkopfdichtung (1; 12) nach einem der vorhergehenden Ansprüche, **dadurch gekennzeichnet, daß** jeder Öffnung eine einstückige Brennraumeinfassung (2) zugeordnet ist oder aber zumindest zwei Öffnungen jeweils eine Brennraumeinfassung (2) zugeordnet ist, die miteinander einstückig ausgebildet sind.

12. Zylinderkopfdichtung nach einem der vorhergehenden Ansprüche, **dadurch gekennzeichnet, dass** die Brennraumeinfassung (2) so dimensioniert ist, daß ihre Längenabmessung (LE) kleiner/ gleich einer Wandstärke (DL) der Zylinderlaufbuchse (11) ist.

13. Verwendung einer Zylinderkopfdichtung nach einem der vorhergehenden Ansprüche bei einem Dieselmotor (8) mit nassen Laufbuchsen und insbesondere variierenden Zylinderlaufbuchsenüberständen

## Claims

1. Multi-layered cylinder head gasket (1; 12) with openings corresponding to a number of combustion chambers of an internal combustion engine fitted with cylinder liners and with a combustion chamber framing (2), arranged towards an opening, whereby the combustion chamber framing (2) encloses at least one functional layer (3) of the cylinder head gasket (1; 12), whereby a full crease (5) of the functional layer (3) is arranged inside the combustion chamber framing (2), whereby the cylinder head gasket (1, 12) has an external layer (10, 27), which is arranged outside the combustion chamber framing (2) and in the assembled condition extends outside the cylinder lining (11), **characterised in that** the combustion chamber framing (2) is made of a ductile stainless steel sheet, whereby the full crease (5) is made from a spring steel sheet and the cylinder head gasket (1; 12) has a first spacer layer (4) in the form of a steel sheet to adjust the thickness of the cylinder head gasket (1; 12), which extends inside the combustion chamber framing (2).

2. Cylinder head gasket (1; 12) according to Claim 1, **characterised in that** the external layer (10, 27) is connected to at least one other layer (3, 4) of the cylinder head gasket (1).

3. Cylinder head gasket (1; 12) according to Claim 1 or 2, **characterised in that** the external layer (10) has a first edge (23), which lies directly opposite a second edge (22) of the combustion chamber framing (2) without contact, so that a gap thus formed is at least 0.3 millimeters wide.

4. Cylinder head gasket (1; 12) according to any one of Claims 1 to 3, **characterised in that** the combustion chamber framing (2) has a height (HB) that is between 0 mm and 0.3 mm greater in relation to another height (HZ) of the cylinder head gasket (1; 12).

5. Cylinder head gasket (1; 12) according to any one of the preceding claims, **characterised in that** a first material thickness (DM) of the combustion chamber framing (2) has a ratio to a second material thickness (DS) of the external layer (10, 27) of DM: DS of approximately 1:1.2 to 1:1.5.

6. Cylinder head gasket (1; 12) according to any one of the preceding claims, **characterised in that** the combustion chamber framing (2) is hardened, in particular by means of induction hardening.

7. Cylinder head gasket (1; 12) according to any one of the preceding claims, **characterised in that** at least one exterior face of the combustion chamber framing (2) has a friction-reducing and/or sealing coating (21).

8. Cylinder head gasket (1; 12) according to any one of the preceding claims, **characterised in that** the geometry of the combustion chamber framing (2) has a roughly perpendicular bridge (16), which extends approximately parallel to the cylinder liner (11).

9. Cylinder head gasket (1; 12) according to any one of the preceding Claims 1 to 8, **characterised in that** the geometry of the combustion chamber framing (2) is V-shaped.

10. Cylinder head gasket (1; 12) according to any one of the preceding Claims 1 to 9, **characterised in that** geometry of the combustion chamber framing (2) is curved so that an extension of the combustion chamber framing (2) leads to an overlap beyond a first (14) and a second (15) end of the combustion chamber framing (2).

11. Cylinder head gasket (1; 12) according to any one of the preceding claims, **characterised in that** one integral combustion chamber framing (2) is assigned to each opening, or however at least one combustion chamber framing (2) is assigned to two openings, which are integrally formed with one another in each case.

12. Cylinder head gasket according to any one of the preceding claims, **characterised in that** the combustion chamber framing (2) is dimensioned so that its longitudinal dimension (LE) is smaller than/equal to a wall thickness (DL) of the cylinder liner (11).

13. Use of a cylinder head gasket according to any one of the preceding claims for a diesel engine (8) with wet liners and in particular varying cylinder liner projections.

## Revendications

1. Joint de culasse à couches multiples (1 ; 12) comportant des ouvertures en nombre correspondant aux chambres de combustion d'un moteur à combustion interne à chemises de cylindre insérées et comportant un cerclage de chambre de combustion (2) disposé en direction d'une ouverture, le cerclage de chambre de combustion (2) encerclant au moins une couche fonctionnelle (3) du joint de culasse (1 ; 12), une moulure pleine (5) de la couche fonctionnelle (3) étant disposée à l'intérieur du cerclage de chambre de combustion (2), le joint de culasse (1 ; 12) comportant une couche externe (10, 27) qui est disposée en dehors du cerclage de chambre de combustion (2), séparément de celui-ci, et qui, à l'état monté, s'étend en dehors de la chemise de cylindre (11), **caractérisé en ce que** le cerclage de chambre de combustion (2) est fabriqué à partir d'une tôle d'acier spécial étirable, une moulure pleine (5) étant formée dans une tôle d'acier à ressorts et le joint de culasse (1 ; 12) comportant une première couche d'écartement (4) sous forme de tôle d'acier qui sert à adapter l'épaisseur du joint de culasse (1 ; 12) et qui s'étend jusqu'à l'intérieur du cerclage de chambre de combustion (2).

2. Joint de culasse (1 ; 12) selon la revendication 1, **caractérisé en ce que** la couche externe (10, 27) est reliée à au moins une autre couche (3, 4) du joint de culasse (1).

3. Joint de culasse (1 ; 12) selon la revendication 1 ou 2, **caractérisé en ce que** la couche externe (10) comporte un premier bord (23) qui, sans aucun contact, fait directement face à un deuxième bord (22) du cerclage de chambre de combustion (2) de manière à ce qu'une fente d'au moins 0,3 mm soit ainsi formée.

4. Joint de culasse (1 ; 12) selon l'une des revendications 1 à 3, **caractérisé en ce que** le cerclage de chambre de combustion (2) a une hauteur (HB) qui est supérieure de 0 mm à 0,3 mm à la hauteur (HZ) du reste du joint de culasse (1 ; 12).

5. Joint de culasse (1 ; 12) selon l'une des revendications précédentes, **caractérisé en ce qu'**une première épaisseur de matière (DM) du cerclage de chambre de combustion (2) est dans un rapport DM / DS d'environ 1 / 1,2 à 1 / 1,5 avec une deuxième épaisseur de matière (DS) de la couche externe (10, 27).

6. Joint de culasse (1 ; 12) selon l'une des revendications précédentes, **caractérisé en ce que** le cerclage de chambre de combustion (2) est durci, notamment au moyen d'une trempe par induction.

7. Joint de culasse (1 ; 12) selon l'une des revendications précédentes, **caractérisé en ce qu'**au moins une surface extérieure du cerclage de chambre de combustion (2) comporte un revêtement réduisant la friction et/ou assurant l'étanchéité (21).

8. Joint de culasse (1 ; 12) selon l'une des revendications précédentes, **caractérisé en ce qu'**une forme du cerclage de chambre de combustion (2) comporte un dos à peu près vertical (16) qui s'étend à peu près parallèlement à la chemise de cylindre (11).

9. Joint de culasse (1 ; 12) selon l'une des revendications précédentes 1 à 8, **caractérisé en ce que** la géométrie du cerclage de chambre de combustion (2) est en forme de V.

10. Joint de culasse (1 ; 12) selon l'une des revendications précédentes 1 à 9, **caractérisé en ce que** la géométrie du cerclage de chambre de combustion (2) est cintrée de manière que le prolongement du cerclage de chambre de combustion (2) au-delà d'une première (14) et d'une deuxième (15) extrémité du cerclage de chambre de combustion (2) aboutisse à une intersection.

11. Joint de culasse (1 ; 12) selon l'une des revendications précédentes, **caractérisé en ce qu'**un cerclage de chambre de combustion (2) fait d'une seule pièce est associé à chaque ouverture, ou bien **en ce qu'**à au moins deux ouvertures sont respectivement associés un nombre correspondant de cerclages de chambre de combustion (2) qui sont réalisés ensemble d'une seule pièce.

12. Joint de culasse selon l'une des revendications précédentes, **caractérisé en ce que** le cerclage de chambre de combustion (2) a des dimensions telles que son étendue en longueur (LE) soit inférieure ou égale à l'épaisseur de paroi (DL) de la chemise de cylindre (11).

13. Utilisation d'un joint de culasse selon l'une des revendications précédentes dans un moteur diesel (8) à chemises humides et, notamment, à saillies de chemise de cylindre variables.
